# EUROPÄISCHE PATENTSCHRIFT

(11) **EP 0 401 607 B1**
(45) Veröffentlichungstag und Bekanntmachung des Hinweises auf die Patenterteilung: **01.12.1993**
(21) Anmeldenummer: 90109858.2
(22) Anmeldetag: 23.05.1990
(51) Int. Cl.: F16K 1/00, F16K 31/02, F15B 13/00

(54) **Verfahren zur Herstellung eines Mikroventils und Mikroventil**
Method for manufacturing a microvalve and microvalve
Procédé de fabrication d'une microsoupape et microsoupape

(30) Priorität: 29.05.1989 DE 3917423
(43) Veröffentlichungstag der Anmeldung: 12.12.1990
(73) Patentinhaber: BÜRKERT GMBH & CO. WERK INGELFINGEN, D-74653 Ingelfingen (DE); KERNFORSCHUNGSZENTRUM KARLSRUHE GMBH, D-76050 Karlsruhe (DE)
(72) Erfinder: Kowanz, Bernd, D-7515 Linkenheim (DE); Schmidt, Dirk Dr., D-7513 Stutensee 1 (DE); Ehrfeld, Wolfgang Dr., D-7500 Karlsruhe 41 (DE)
(74) Vertreter: Degwert, Hartmut, Dipl.-Phys.

(56) Entgegenhaltungen:
- DE-A- 3 006 298
- DE-A- 3 037 078
- DE-A- 3 635 216
- US-A- 4 158 368

## Beschreibung

Die Erfindung betrifft ein Verfahren zur Herstellung eines Mikroventils sowie ein Mikroventil.

Insbesondere betrifft die Erfindung ein Verfahren zur Herstellung einer Mikroventilanordnung aus zwei allgemein plattenförmigen, einander gegenüberliegenden Ventilelementen, von denen das eine mehrere Ventilsitze und das andere mehrere korrespondierende Schließkörper aufweist, sowie das durch dieses Verfahren hergestellte Mikroventil (siehe z.B. DE-A-3635216).

Es besteht ein zunehmender Bedarf für hochminiaturisierte Ventile, die auch als Mikroventile bezeichnet werden. Für die hochgenaue Dosierung von Flüssigkeiten und Gasen werden kurze Schaltzeiten, geringes Totvolumen und geringer Verschleiß gefordert. Diese Forderungen lassen sich prinzipiell durch geringe bewegte Massen und kleine Stellwege erfüllen. Um bei geringem Hub des Schließkörpers eine große effektive Nennweite des Ventilsitzes zu erzielen, können zahlreiche Ventilsitze und korrespondierende Schließkörper strömungsmäßig parallel geschaltet werden. Die Dichtflächen der einzelnen Ventilsitze und Schließkörper haben dann sehr kleine Abmessungen, und ihre Strukturen müssen hochgenau gefertigt werden, um einen dichten Verschluß zu gewährleisten. Mit herkömmlichen Methoden der feinmechanischen Bearbeitung lassen sich aber nur Toleranzen verwirklichen, die einer Miniaturisierung enge Grenzen setzen und überdies einen extrem hohen Fertigungsaufwand erfordern.

Der Erfindung liegt die Aufgabe zugrunde, ein Mikroventil zur Verfügung zu stellen, das bei geringem Bearbeitungsaufwand eine hohe Paßgenauigkeit der Dichtflächen ermöglicht und somit einer rationellen Serienfertigung zugänglich ist.

Diese Aufgabe wird bei einem Verfahren der eingangs genannten Art erfindungsgemäß dadurch gelöst, daß die Dichtflächen eines sekundären Ventilelements durch Abformen der Dichtflächen eines primären Ventilelements hergestellt werden.

Das durch die Erfindung geschaffene Mikroventil weist somit zwei plattenförmige Ventilelemente auf, von denen das eine eine Vielzahl von Ventilsitzen und das andere ebenso viele korrespondierende Schließkörper aufweist, wobei die miteinander zusammenwirkenden Dichtflächen beider Ventilelemente mit einer Genauigkeit im Submikrometerbereich zueinander komplementär sind. Da bei Anwendung von herkömmlichen Fertigungsverfahren allenfalls einzelne Flächen mit einer Genauigkeit bis in den Mikrometerbereich bearbeitet werden können, keinesfalls aber eine Vielzahl von einzelnen Dichtflächen beider Ventilelemente, stellt bei dem erfindungsgemäßen Mikroventil die Eigenschaft, daß die miteinander korrespondierenden Dichtflächen beider Ventilelemente mit einer Genauigkeit bis in den Submikrometerbereich zueinander komplementär sind, ein materielles Unterscheidungsmerkmal dar.

Nach dem erfindungsgemäßen Verfahren wird die hohe Genauigkeit der komplementären Gestaltung der Dichtflächen beider Ventilelemente durch Abformen der Dichtflächen des einen Ventilelements auf denen des anderen erzielt. Je nach Materialbeschaffenheit können vor dem Abformen mindestens die Dichtflächen des einen Ventilelements mit einer Trennschicht versehen werden, damit sich die Ventilelemente leicht voneinander lösen. Alternativ kann das Abformmaterial mit einem internen Trennmittel versetzt werden.

Besonders günstig ist ferner die Verwendung von Ventilelementen, deren Dichtflächen zur Hubrichtung geneigt sind, da auf diese Weise eine Selbstzentrierung gefördert wird.

Vorteilhaft ist ferner die Anordnung der Dichtsitze und Schließkörper in parallelen Reihen und in benachbarten Reihen jeweils gegeneinander versetzt.

Die durch die Erfindung zur Verfügung gestellten Mikroventile eröffnen neue Anwendungsmöglichkeiten. Wegen ihrer extrem kurzen Schaltzeiten können diese Mikroventile in elektronische Regelkreise und Steuerungen einbezogen werden. Beispielsweise wird es möglich, proportionale Durchflußsteuerungen oder -regelungen mittels Pulsbreitenmodulation zu verwirklichen. Die Mikroventile können also durch digitale Signale direkt angesteuert werden. Voraussetzung hierfür ist die Verwendung eines Ventilantriebs, der gleichfalls extrem kurze Schaltzeiten bei geringer Schaltleistung und eine extrem hohe Anzahl von Schaltspielen ermöglicht. Das erfindungsgemäße Mikroventil ist daher vorzugsweise mit einem piezoelektrischen oder magnetostriktiven Antrieb ausgestattet. Die durch das erfindungsgemäße Mikroventil eröffneten Möglichkeiten einer schnellen und hochgenauen Dosierung können zu neuartigen Geräten besonders auf dem Gebiet der Analysentechnik und der Medizin führen.

Das bei dem erfindungsgemäßen Verfahren vorgesehene Abformen der Dichtflächen des einen Ventilelements auf denen des anderen Ventilelements kann mit den Methoden der Kunststofformtechnik, der Gießverfahren oder der Galvanoformung durchgeführt werden.

Weitere Merkmale und Vorteile der Erfindung ergeben sich aus den Unteransprüchen sowie aus der folgenden Beschreibung mehrerer Ausführungsformen und aus der Zeichnung, auf die Bezug genommen wird. In der Zeichnung zeigen:
- Figur 1: schematische Querschnittsansichten, die eine erste Ausführungsform des erfindungsgemäßen Verfahrens zur Herstellung eines Mikroventils veranschaulichen;
- Figur 2: eine schematische Perspektivansicht eines Ventilelements des Mikroventils;
- Figur 3: zwei Querschnittsansichten zur Erläuterung der Funktionsweise des erfindungsgemäßen Mikroventils;
- Figur 4: einen schematischen Querschnitt einer Ausführungsform des Mikroventils mit piezoelektrischem Antrieb; und
- Figur 5: einen schematischen Querschnitt einer Ausführungsform des Mikroventils mit magnetostriktivem Antrieb.

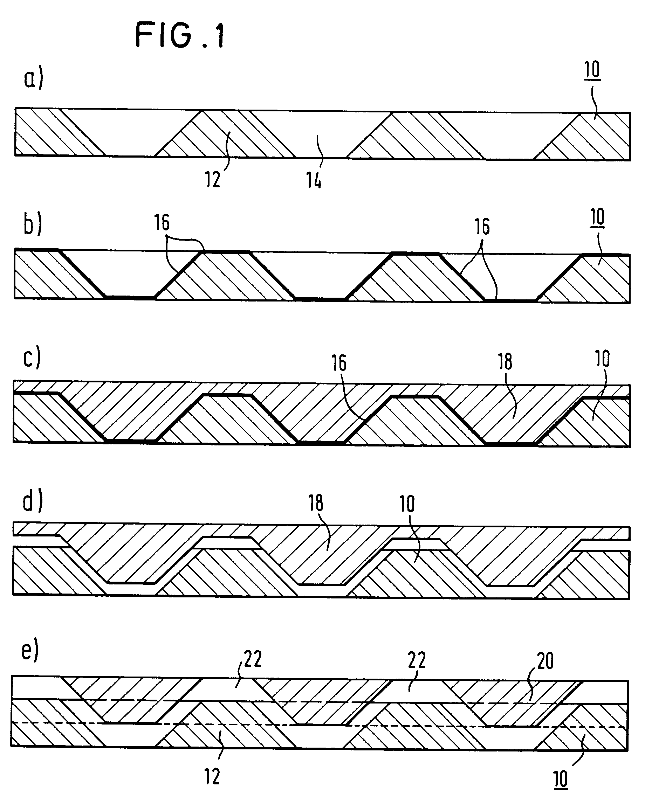

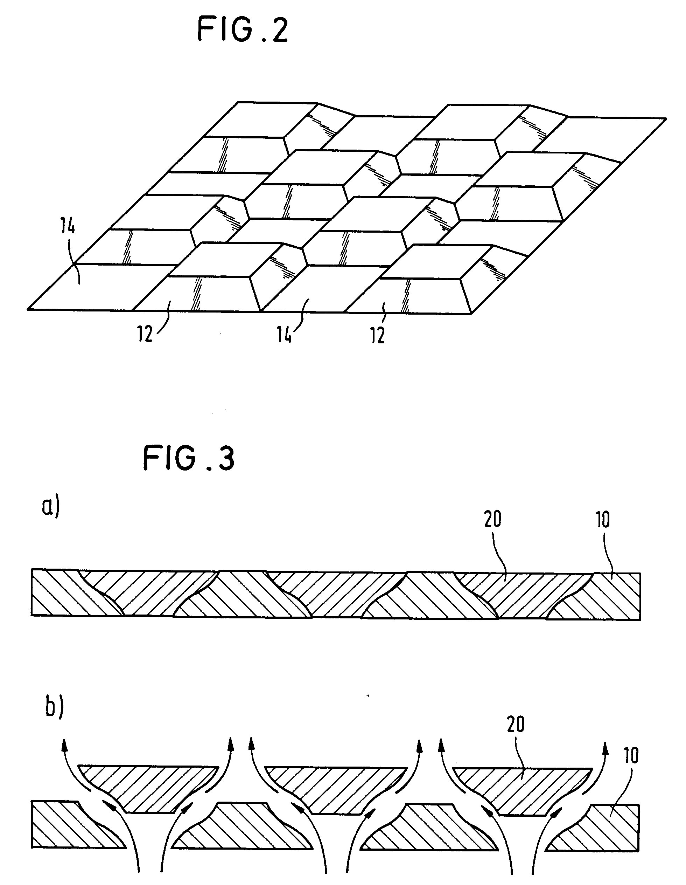

Das in Figur 1 veranschaulichte Verfahren zur Herstellung eines Mikroventils besteht aus fünf Stufen, die mit a bis e bezeichnet sind. In der Stufe a wird von einem Ventilelement 10 ausgegangen, das aus einer Vielzahl von miteinander abwechselnden Schließkörpern 12 und Ventilöffnungen 14 besteht, die gleich groß und von komplementärer Gestalt sind. Im Querschnitt sind die Schließkörper 12 und Ventilöffnungen 14 trapezförmig. In Draufsicht sind sie quadratisch, wie in Figur 2 zu erkennen ist.

Dieses Ventilelement 10 wird bei geringen Ansprüchen an die Fertigungstoleranz nach einem herkömmlichen Verfahren strukturiert. Möglich ist die Herstellung aus einer einkristallinen Silizium (100)-Scheibe durch anisotropes Ätzen. Bei einem anderen Herstellungsverfahren erfolgt die Herstellung durch partielle Bestrahlung eines strahlungsempfindlichen Resists und anschließende Entwicklung oder durch Kunststoffabformung. In jedem Fall kann eine rationelle Massenfertigungstechnik angewendet werden. Besonders geeignet sind auch Trockenätzprozesse wie in der Halbleiterfertigung üblich, z.B. Ionenätzen oder Zerstäubungsverfahren.

In der Verfahrensstufe b wird das Ventilelement 10 mit einer Trennschicht 16 versehen, die mindestens auf den Dichtflächen des Ventilelements, nämlich den zur Ebene des Ventilelements schrägen Flächen, in Figur 1b jedoch auf der ganzen Oberseite des Ventilelements 10 aufgebracht wird. Als Material für diese Trennschicht 16 kommt ein solches in Betracht, das selektiv gegenüber den Materialien der Ventilelemente entfernt werden kann.

In der darauffolgenden Stufe c erfolgt die Abformung des mit der Trennschicht 16 versehenen Ventilelements 10. Bei bevorzugten Ausführungsformen erfolgt die Abformung durch Kunststoff-Spritzguß oder ein Reaktionsgußverfahren. Bei diesen Gußverfahren bildet das Ventilelement 10 mit einer Grundplatte und einer Deckplatte die Form.Der so gebildete Formkörper 18 entspricht in seiner Oberflächengestalt genau dem Ventilelement 10.

In der Verfahrensstufe d wird die Trennschicht 16 entfernt.

In der Verfahrensstufe e wird die Rückseite des nunmehr von dem Ventilelement 10 gelösten Formkörpers 18 abgeschliffen und/oder poliert, bis ein Ventilelement 20 mit Ventilöffnungen 22 entstanden ist, welche die gleiche Form wie die Ventilöffnungen 14 des Ventilelements 10 aufweisen und jeweils dem in Figur 1e darunterliegenden Schließkörper 12 des Ventilelements 10 zugeordnet sind. Die einander entsprechenden Dichtflächen der Ventilelemente 10, 20 sind voneinander abgeformt und daher hochgradig komplementär zueinander. Das Ventilelement 10 kann mit relativ weiten Fertigungstoleranzen hergestellt werden, da jede Oberflächen- oder Lageabweichung auf den Dichtflächen des Ventilelements 10 durch die Dichtflächen des Ventilelements 20 genau nachgebildet wird. Man erhält so ohne Nachbearbeitung der Dichtflächen eine hochgenaue Passung der beiden Ventilelemente 10, 20 aufeinander.

Bei einer Variante des Herstellungsverfahrens ist das Ventilelement 10 seinerseits von einem Musterteil abgeformt, insbesondere durch Kunststoffabformung.

Bei einer weiteren Variante des Verfahrens erfolgt die Abformung in der Verfahrensstufe c galvanisch durch Abscheiden von Metall auf der Trennschicht 16.

Bei einer weiteren Variante des erfindungsgemäßen Verfahrens erfolgt die Abformung in der Verfahrensstufe c durch Einpressen eines der Ventilelemente in ein weiches Material, insbesondere Kunststoffmaterial.

Figur 2 zeigt schematisch die Struktur einer vorteilhaften Ausführungsform eines Ventilelements, das nach dem beschriebenen Verfahren hergestellt wird. Das in Figur 2 gezeigte Ventilelement kann das Ventilelement 10 oder 20 in Figur 1 sein. Die einzelnen Schließkörper 12 sind in parallelen Reihen angeordnet, wobei die Schließkörper in jeder Reihe jeweils mit einer Ventilöffnung 14 abwechseln und in zwei benachbarten Reihen die Schließkörper 12 und Ventilöffnungen 14 jeweils um eine Einheit gegeneinander in Längsrichtung versetzt sind, so daß, mit Ausnahme der Randbereiche, jeweils eine Ventilöffnung 14 von vier Schließkörpern 12 umgeben ist und jeweils ein Schließkörper 12 von vier Ventilöffnungen 14 umgeben ist. In Draufsicht sind die Schließkörper und Ventilöffnungen vorzugsweise quadratisch.

Die Wirkungsweise der Ventilelemente 10, 20 des erfindungsgemäßen Mikroventils ist aus Figur 3 ersichtlich. Figur 3a zeigt die Ventilelemente 10, 20 in der Schließstellung; Figur 2b zeigt sie in der Öffnungsstellung. An der Trapezform der Schließkörper bzw. Ventilöffnungen wird das strömende Medium nur wenig abgelenkt. Entsprechend niedrig ist der Strömungswiderstand beim Durchgang durch die beiden Ventilelemente 10, 20. Figur 3b zeigt auch, daß bei geringem Ventilhub eine große effektive Nennweite, also ein großer Strömungsquerschnitt im geöffneten Zustand der Ventilelemente 10, 20, erzielt wird.

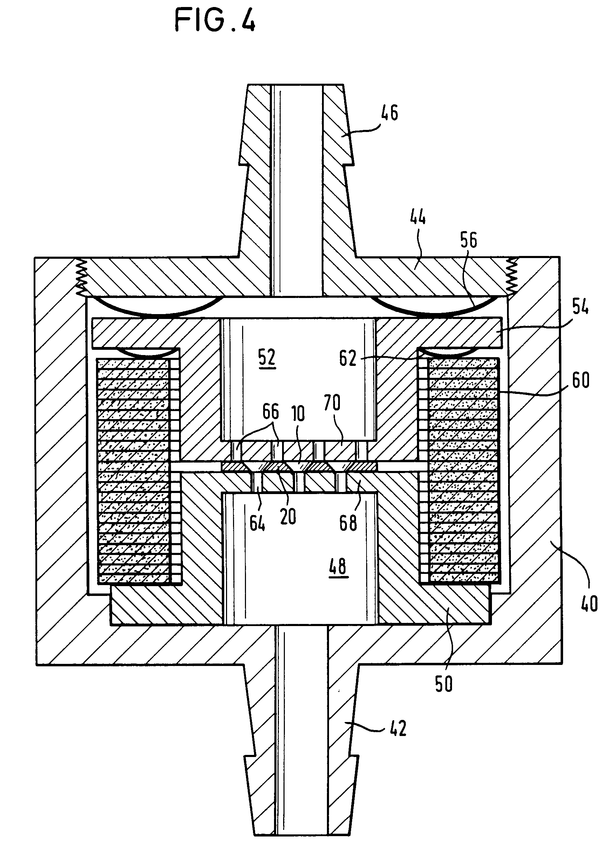

Eine erste Ausführungsform eines die Ventilelemente 10, 20 enthaltenden, vollständigen Mikroventils ist in Figur 4 schematisch dargestellt. In ein topfförmiges Gehäuse 40 mit axialem Anschlußstutzen 42 sind der Ventilantrieb und die Ventilelemente eingesetzt. Das Gehäuse 40 ist auf seiner dem Anschlußstutzen 42 gegenüberliegenden Seite durch einen Deckel 44 verschlossen, der einen axialen Anschlußstutzen 46 aufweist. Der Ventilantrieb besteht aus einem zum Anschlußstutzen 42 koaxialen zylindrischen gehäusefesten Teil 48, das mit einem Flansch 50 auf den Boden des Gehäuses 40 abgestützt ist, einem zylindrischen, zu den Anschlußstutzen 42, 46 koaxialen beweglichen Teil 52 mit einem Flansch 54, der über eine Tellerfeder 56 am Deckel 44 abgestützt ist, und eine Vielzahl von Ringen aus piezoelektrischem Material 60, die abwechselnd mit Kontaktierungsringen zur Spannungsversorgung gestapelt sind, wobei dieser Stapel zwischen den einander zugewandten Flächen der Flansche 50, 54 angeordnet ist und der Stapel sich über eine weitere Tellerfeder 62 auf dem Flansch 54 abstützt. An den einander zugewandten Enden tragen die zylindrischen Teile 48, 52 die plattenförmigen Ventilelemente 10, 20. Die Ventilöffnungen dieser Ventilelemente 10, 20 fluchten mit jeweils zugeordneten axialen Kanälen 64 und 66, die in einer Trägerplatte 68 bzw. 70 des Statorteils 48 bzw. des beweglichen Teils 52 angebracht sind. Bei der gezeigten Ausführungsform bildet die Trägerplatte 70 zugleich das Ventilelement 10; das durch Abformen hergestellte Ventilelement 20 ist hingegen als getrenntes Teil auf die Trägerplatte 68 aufgesetzt und an dieser befestigt.

Die Anschlußstutzen 42, 46 und die Kanäle 64, 66 münden in einen durch die Ventilelemente zweigeteilten zylindrischen Ventilraum.

Beim Anlegen einer Steuerspannung an die Ringe 60 aus piezoelektrischem Material dehnen sich diese in Axialrichtung aus. Zwar dehnt sich jedes einzelne piezoelektrische Element nur um einen geringen Betrag, durch die Stapelung einer Vielzahl von piezoelektrischen Elementen wird jedoch eine Addition der einzelnen Dehnungsbeiträge erzielt. Der gewünschte Ventilhub läßt sich also leicht durch Bemessung der Anzahl von aufeinandergestapelten piezoelektrischen Ringen 60 einstellen.

Die im Vergleich zur Tellerfeder 56 hart ausgelegte Tellerfeder 62 ist zum Spielausgleich zwischen dem Stapel von Ringen 60 und den Flanschen 50, 54 vorgesehen. Die Tellerfeder 56 wirkt als Rückstellfeder, welche das Aktuatorteil 54 in die Schließstellung beaufschlagt, so daß das Ventilelement 10 nach Beendigung der Erregung der piezoelektrischen Ringe 60 in seine Schließstellung in Anlage an dem Ventilelement 20 zurückkehrt.

Die Darstellung in Figur 4 läßt einige vorteilhafte Eigenschaften des erfindungsgemäßen Mikroventils leicht erkennen. Zwischen den Anschlußstutzen 42, 46 wird das Ventil in Axialrichtung durchströmt, wobei an den Ventilelementen 10, 20 eine nur geringe Umlenkung der Strömung erfolgt. Entsprechend niedrig sind die Strömungsverluste. Da ferner piezoelektrische Elemente mit Frequenzen bis weit über den kHz-Bereich hinaus angesteuert werden können, lassen sich extrem kurze Schaltzeiten erreichen.

Der Aufbau des Mikroventils eignet sich für eine automatisierte Montage, da alle Bauteile in Axialrichtung zusammengesetzt werden. Da die Ventilelemente 10, 20 sich beim Schließvorgang aneinander ausrichten, sind hochgenaue Führungsmittel entbehrlich.

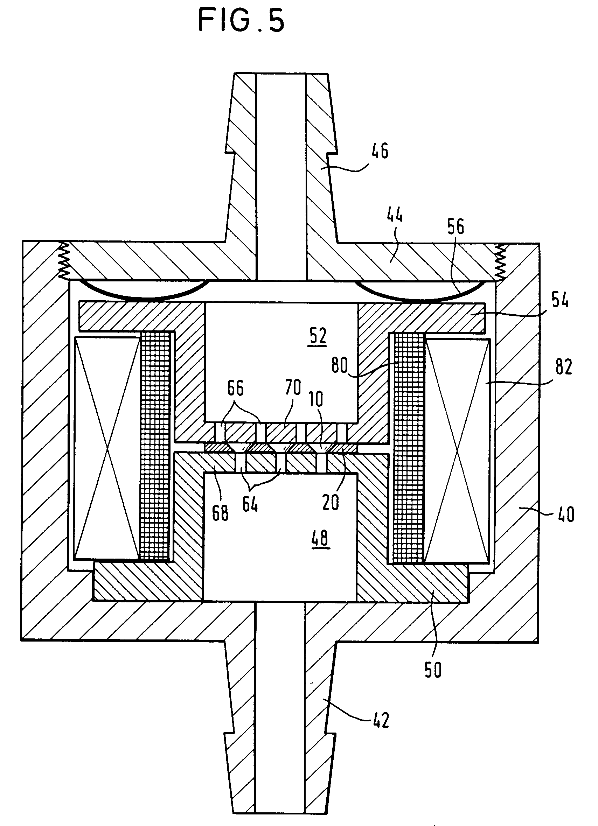

Die in Figur 5 gezeigte Ausführungsform des Mikroventils unterscheidet sich von der nach Figur 4 lediglich durch den Ventilantrieb, so daß nur dieser hier beschrieben wird. Anstelle des Stapels von piezoelektrischen Ringen wird ein rohrförmiges magnetostriktives Element 80 zwischen den Flanschen 50, 54 angeordnet; das rohrförmige magnetostriktive Element 80 ist von einer Erregerspule 82 umgeben. Bei Ansteuerung dieser Erregerspule 82 dehnt sich das rohrförmige magnetostriktive Element 80 in Axialrichtung aus und drückt die Flansche 50, 54 in Axialrichtung auseinander. Die Tellerfeder 56 wirkt in gleicher Weise wie bei der Ausführungsform nach Figur 4 als Rückstellfeder.

Außer einem piezoelektrischen oder magnetostriktiven Ventilantrieb kommen auch herkömmliche elektromagnetische Antriebe in Betracht, die auf hohe Schaltfrequenz optimiert sind. Für spezielle Anwendungen kommen auch Bimetall-Ventilantriebe oder Formgedächtnis-Metall-Ventilantriebe in Betracht.

## Patentansprüche

1. Verfahren zur Herstellung einer Mikroventilanordnung aus zwei allgemein plattenförmigen, einander gegenüberliegenden Ventilelementen (10, 20), von denen das eine mehrere Ventilsitze und das andere mehrere korrespondierende Schließkörper aufweist, dadurch gekennzeichnet, daß die Dichtflächen eines sekundären Ventilelements (20) durch Abformen der Dichtflächen eines primären Ventilelements (10) hergestellt werden, so daß die Dichtflächen beider Ventilelemente (10, 20) zueinander komplementär sind.

2. Verfahren nach einem der vorstehenden Ansprüche, dadurch gekennzeichnet, daß die Dichtflächen schräg zu einer zu den plattenförmigen Ventilelementen parallelen Ebene angeordnet werden.

3. Verfahren nach Anspruch 1 oder 2, dadurch gekennzeichnet, daß das Lösen der Ventilelemente voneinander durch Beseitigen einer auf wenigstens einer der Dichtflächen aufgebrachten Trennschicht erfolgt.

4. Verfahren nach Anspruch 3, dadurch gekennzeichnet, daß die Beseitigung der Trennschicht durch selektives Ätzen erfolgt.

5. Verfahren nach einem der vorstehenden Ansprüche, dadurch gekennzeichnet, daß die Gestaltung der primären Ventilelemente durch eine rationelle Fertigungstechnologie minderer Fertigungsgenauigkeit wie Stanzen oder dergleichen erfolgt.

6. Verfahren nach einem der Ansprüche 1 bis 5, dadurch gekennzeichnet, daß das sekundäre Ventilelement durch Kunststoffabformung hergestellt wird.

7. Verfahren nach einem der Ansprüche 1 bis 5, dadurch gekennzeichnet, daß das sekundäre Ventilelement durch Einpressen des primären Ventilelements in ein weiches Material hergestellt wird.

8. Verfahren nach einem der Ansprüche 1 bis 5, dadurch gekennzeichnet, daß das sekundäre Ventilelement durch Galvanoformung hergestellt wird.

9. Verfahren nach einem der Ansprüche 1 bis 5, dadurch gekennzeichnet, daß das sekundäre Ventilelement durch Metallguß hergestellt wird.

10. Verfahren nach Anspruch 6, dadurch gekennzeichnet, daß der bei der Kunststoffabformung verwendete Kunststoff mit einem Trennmittel verätzt wird.

11. Verfahren nach Anspruch 6, dadurch gekennzeichnet, daß das Abformen des sekundären Ventilelements durch Kunststoffabformung mittels Spritzguß erfolgt.

12. Verfahren nach einem der Ansprüche 1 bis 5, dadurch gekennzeichnet, daß das Abformen des sekundären Ventilelements mittels eines Reaktionsgußverfahrens erfolgt.

13. Verfahren nach einem der vorstehenden Ansprüche, dadurch gekennzeichnet, daß die nach dem Abformen eventuell verschlossenen Ventilöffnungen durch Schleifen und/oder Polieren und/oder Fräsen der von den Ventilflächen abgewandten Fläche des durch Abformen hergestellten Ventilelements freigelegt werden.

14. Mikroventil, hergestellt nach dem im Anspruch 1 definierten Verfahren, mit zwei allgemein plattenförmigen, einander gegenüberliegenden Ventilelementen (10, 20), von denen das eine eine Vielzahl von Ventilsitzen und das andere ebensoviele korrespondierende Schließkörper aufweist, dadurch gekennzeichnet, daß die miteinander zusammenwirkenden Dichtflächen beider Ventilelemente (10, 20) mit einer Genauigkeit im Submikrometerbereich zueinander komplementär sind.

15. Mikroventil nach Anspruch 14, dadurch gekennzeichnet, daß ein primäres Ventilelement Dichtflächen aufweist, die in einer Technologie minderer Fertigungsgenauigkeit hergestellt sind.

16. Mikroventil nach Anspruch 14 oder 15, dadurch gekennzeichnet, daß die Schließkörper (12) des einen bzw. die Ventilöffnungen (14) des anderen Ventilelements im Querschnitt trapezförmig ausgebildet sind.

17. Mikroventil nach einem der Ansprüche 14 bis 16, dadurch gekennzeichnet, daß die Schließkörper (12) und Ventilöffnungen (14) in parallelen Reihen angeordnet sind und in benachbarten Reihen die Schließkörper (12) bzw. Ventilöffnungen (14) gegeneinander versetzt sind.

18. Mikroventil nach einem der Ansprüche 14 bis 17, dadurch gekennzeichnet, daß der Ventilantrieb ein piezoelektrischer Antrieb ist.

19. Mikroventil nach einem der Ansprüche 14 bis 17, dadurch gekennzeichnet, daß der Ventilantrieb ein Bimetall-Antrieb ist.

20. Mikroventil nach einem der Ansprüche 14 bis 17, dadurch gekennzeichnet, daß der Ventilantrieb ein Formgedächtnis-Metall-Antrieb ist.

21. Mikroventil nach einem der Ansprüche 14 bis 17, dadurch gekennzeichnet, daß der Ventilantrieb ein magnetostriktiver Antrieb ist.

22. Mikroventil nach einem der Ansprüche 14 bis 21, dadurch gekennzeichnet, daß die Ventilelemente (10, 20) an je einer mit axialen Kanälen versehenen Trägerscheibe (68, 70) angeordnet sind, von denen die eine an ein gehäusefestes Teil (48) und die andere an ein bewegliches Teil (52) des Ventilantriebs angeschlossen ist.

23. Mikroventil nach Anspruch 22, dadurch gekennzeichnet, daß das gehäusefeste Teil (48) und das bewegliche Teil (52) mit den Ventilelementen (10, 20) und dem Ventilantrieb (60) in Axialrichtung in ein insbesondere zylindrisches Gehäuse (40) eingesetzt sind, das an seinen Stirnseiten mit koaxialen Anschlußstutzen (42, 46) versehen ist.

24. Mikroventil nach Anspruch 23, dadurch gekennzeichnet, daß der Ventilantrieb (60) durch einen Stapel von mit Elektroden versehenen Ringen (60) aus piezoelektrischem Material gebildet ist.

25. Mikroventil nach Anspruch 23, dadurch gekennzeichnet, daß der Ventilantrieb aus einer rohrförmigen Anordnung von magnetostriktiven Teilen (80) und einer diese umgebenden Erregerspule (82) gebildet ist.

26. Mikroventil nach Anspruch 24 oder 25, dadurch gekennzeichnet, daß das gehäusefeste Teil (48) und das bewegliche Teil (52) einen an je eine Trägerplatte (68, 70) angeschlossenen hohlzylindrischen Abschnitt und einen Flansch (50, 54) aufweisen und daß der rohr- oder ringförmige Ventilantrieb (60, 80, 82) zwischen diesen Flanschen (50, 54) angeordnet ist und die hohlzylindrischen Abschnitte umgibt.

27. Mikroventil nach einem der Ansprüche 14 bis 26, dadurch gekennzeichnet, daß beide Ventilelemente (10, 20) aus nichtelastischem Material bestehen.

## Claims

1. A method for the production of a microvalve arrangement comprising two generally plate-like valve elements (10, 20) placed opposite to each other, of which one possesses a plurality of valve seats and the other possesses a plurality of corresponding valve members, characterized in that the sealing surfaces of a secondary valve element (20) are produced by molding using the sealing surfaces of a primary valve element (10) so that the sealing surfaces of both valve elements (10, 20) are complementary to each other.

2. The method as claimed in claim 1, characterized in that the sealing surfaces are arranged so as to be oblique in relation to a plane which is parallel to the plate-like valve elements.

3. The method as claimed in claim 1 or in claim 2, characterized in that the detachment of the valve elements from each other is performed by elimination of a separating layer applied to at least one of the sealing surfaces.

4. The method as claimed in claim 3, characterized in that the elimination of the separating layer is performed by selective etching.

5. The method as claimed in any one of the preceding claims, characterized in that the shaping of the primary valve elements is performed by a rational manufacturing technique of low accuracy such as stamping or the like.

6. The method as claimed in any one of the preceding claims 1 through 5, characterized in that the secondary valve element is produced by plastic molding.

7. The method as claimed in any one of the preceding claims 1 through 5, characterized in that the secondary valve element is produced by pressing the primary valve element against a soft material.

8. The method as claimed in any one of the preceding claims 1 through 5, characterized in that the secondary valve element is produced by galvanoforming.

9. The method as claimed in any one of the preceding claims 1 through 5, characterized in that the secondary valve element is produced by casting a metal.

10. The method as claimed in claim 6, characterized in that the plastic used in the plastic molding process is etched with a separating or stripping material.

11. The method as claimed in claim 6, characterized in that the molding of the secondary valve element is performed by plastic molding in an injection molding technique.

12. The method as claimed in any one of the preceding claims 1 through 5, characterized in that the molding of the secondary vlave element is performed using a reactive casting method.

13. The method as claimed in any one of the preceding claims, characterized in that the valve ports, which after molding may be in a closed condition are freed by lapping and/or polishing and/or milling of the surfaces, remote from the valve surfaces, of the valve element produced by molding.

14. A microvalve produced by the method defined in claim 1 and comprising two essentially plate-like valve elements (10, 20) placed opposite to each other, of which one possesses a plurality of valve seats and the other possesses an equal number of corresponding valve members, characterized in that the mutually cooperating sealing surfaces of the two valve elements (10 and 20) are complementary to each other with a degree of accuracy in the submicron range.

15. The microvalve as claimed in claim 14, characterized in that a primary valve element has sealing surfaces, which are produced using a manufacturing technique with a liberal degree of accuracy.

16. The microvalve as claimed in claim 14 or claim 15, characterized in that the valve members (12) of the one valve element and, respectively, the valve ports (14) of the other valve element are trapezoidal in cross section.

17. The microvalve as claimed in any one of the preceding claims 14 through 16, characterized in that the valve members (12) and the valve ports (14) are arranged in respective parallel rows and in quicunx.

18. The microvalve as claimed in any one of the preceding claims 14 through 17, characterized in that the valve drive is a piezoelectric drive.

19. The microvalve as claimed in any one of the preceding claims 14 through 17, characterized in that the valve drive is bimetallic drive.

20. The microvalve as claimed in any one of the preceding claims 14 through 17, characterized in that the valve drive is a plastic memory metal drive.

21. The microvalve as claimed in any one of the preceding claims 14 through 17, characterized in that the valve drive is a magnetostrictive drive.

22. The microvalve as claimed in any one of the preceding claims 14 through 21, characterized in that the valve elements (10 and 20) are respectively arranged on a carrier disk (68 and 70) provided with axial channels, of which one is connected with a part (48) secured to a valve housing, and the other is connected with a moving part (52) of the valve drive.

23. The microvalve as claimed in claim 22, characterized in that the part (48) secured to the housing and the moving part (52) with the valve elements (10 and 20) and the valve drive (60) are inserted axially into a more especially cylindrical housing (40), which at ends therof is provided with coaxial spigots (42 and 46).

24. The microvalve as claimed in claim 23, characterized in that the valve drive (60) is formed by a stack of rings (60) which are made of piezoelectric material and bear electrodes.

25. The microvalve as claimed in claim 23, characterized in that the valve drive is formed by an annular arrangement of magnetostrictive parts (80) and an exciting coil (82) surrounding same.

26. The microvalve as claimed in claim 24 or in claim 25, characterized in that the part secured to the housing and the moving part (52) have a tubular part connected with a respective carrier plate (68 and 70) and a flange (50 and 54) and in that the tubular or annular valve drive (60, 80 and 82) is arranged between these flanges (50 and 54) and surrounds the said tubular section.

27. The microvalve as claimed in any one of the preceding claims 14 through 26, characterized in that the two valve elements (10 and 20) are made of non-elastic material.

## Revendications

1. Procédé pour la fabrication d'un agencement de microvanne constitué de deux éléments de vanne (10, 20) en forme générale de plaques situés en face l'un de l'autre dont l'un présente plusieurs sièges de vanne et l'autre plusieurs obturateurs correspondants, caractérisé en ce que les faces d'étanchéité d'un élément de vanne secondaire (20) sont fabriquées par moulage des faces d'étanchéité d'un élément de vanne primaire (10) de telle sorte que les faces d'étanchéité des deux éléments de vanne (10, 20) sont mutuellement complémentaires.

2. Procédé selon la revendication 1, caractérisé en ce que les faces d'étanchéité sont disposées de manière oblique par rapport à un plan parallèle aux éléments de vanne en forme de plaques.

3. Procédé selon la revendication 1 ou 2, caractérisé en ce que la séparation des éléments de vanne est effectuée par l'élimination d'une couche séparatrice appliquée sur au moins l'une des faces d'étanchéité.

4. Procédé selon la revendication 3, caractérisé en ce que l'élimination de la couche séparatrice est effectuée par attaque chimique sélective.

5. Procédé selon l'une des revendications précédentes, caractérisé en ce que la réalisation des éléments de vanne primaires est effectuée selon une technologie de fabrication de faible précision telle que le poinçonnage ou un procédé analogue.

6. Procédé selon l'une des revendications 1 à 5, caractérisé en ce que l'élément de vanne secondaire est fabriqué par moulage d'une matière plastique.

7. Procédé selon l'une des revendications 1 à 5, caractérisé en ce que l'élément de vanne secondaire est réalisé par l'enfoncement sous pression de l'élément de vanne primaire dans un matériau mou.

8. Procédé selon l'une des revendications 1 à 5, caractérisé en ce que l'élément de vanne secondaire est réalisé par moulage galvanoplostique.

9. Procédé selon l'une des revendications 1 à 5, caractérisé en ce que l'élément de vanne secondaire est réalisé par coulée d'un métal.

10. Procédé selon la revendication 6, caractérisé en ce que la matière plastique utilisée lors du moulage subit une attaque chimique au moyen d'un agent de séparation.

11. Procédé selon la revendication 6, caractérisé en ce que le moulage de l'élément de vanne secondaire est effectué par moulage par injection de matière plastique.

12. Procédé selon l'une des revendications 1 à 5, caractérisé en ce que la moulage de l'élément de vanne secondaire est effectué selon un procédé de coulée réactionnelle.

13. Procédé selon l'une des revendications précédentes, caractérisé en ce que les orifices de vanne éventuellement fermés après le moulage sont dégagés par meulage et/ou polissage et/ou fraisage de la face dudit élément fabriqué par moulage opposée aux faces de vanne.

14. Microvanne fabriquée selon le procédé défini dans la revendication 1, comportant deux éléments de vanne (10, 20) situés en face l'un de l'autre, en forme générale de plaques, dont l'un présente une pluralité de sièges de vanne et dont l'autre présente un nombre correspondant d'obturateurs, caractérisée en ce que les faces d'étanchéité coopérant mutuellement des deux éléments (10, 20) sont complémentaires l'une de l'autre avec une précision inférieure à micron.

15. Microvanne selon la revendication 14, caractérisée en ce qu'un élément de vanne primaire présente des faces d'étanchéité qui sont fabriquées selon une technologie de faible précision.

16. Microvanne selon la revendication 14 ou 15, caractérisée en ce que les obturateurs (12) de l'un des éléments et les orifices (14) de l'autre élément ont une section transversale de forme trapézoïdale.

17. Microvanne selon l'une des revendications 14 à 16, caractérisée en ce que les obturateurs (12) et les orifices (14) sont disposés en rangées parallèles et en ce que lesdits obturateurs (12) et lesdits orifices (14) disposés dans des rangées adjacentes, sont décalés les uns par rapport aux autres.

18. Microvanne selon l'une des revendications 14 à 17, caractérisée en ce que l'entraînement de la vanne est un entraînement piézo-électrique.

19. Microvanne selon l'une des revendications 14 à 17, caractérisée en ce que l'entraînement de la vanne est un entraînement à bi-lame.

20. Microvanne selon l'une des revendications 14 à 17, caractérisée en ce que l'entraînement de la vanne est un entraînement par métal à mémorisation de forme.

21. Microvanne selon l'une des revendications 14 à 17, caractérisée en ce que l'entraînement de la vanne est un entraînement par magnétostriction.

22. Microvanne selon l'une des revendications 14 à 21, caractérisée en ce que les éléments (10, 20) sont disposés respectivement sur deux disques supports (68, 70) munis de canaux axiaux dont l'un est raccordé à une partie (48) faisant partie intégrante du carter et dont l'autre est raccordé à une partie mobile (52) de l'entraînement de vanne.

23. Microvanne selon la revendication 22, caractérisée en ce que la partie (48) formant une seule pièce avec le carter et la partie mobile (52) sont insérées, avec les éléments (10, 20) et l'entraînement (60) en direction axiale à l'intérieur d'un carter cylindrique (40) qui est muni sur ses côtés frontaux de raccords coaxiaux (42, 46).

24. Microvanne selon la revendication 23, caractérisée en ce que l'entraînement (60) est formé par une pile de bagues (60) en matériau piézo-électrique munies d'électrodes.

25. Microvanne selon la revendication 23, caractérisée en ce que l'entraînement est constitué d'un arrangement tubulaire de pièces (80) à magnétostriction et d'une bobine d'excitation (82) entourant ces pièces.

26. Microvanne selon la revendication 24 ou 25, caractérisée en ce que la partie (48) formant une seule pièce avec le carter et la partie mobile (52) présentent chacune un tronçon cylindrique creux raccordé respectivement à l'une des plaques supports (68, 70) et une bride (50, 54), et en ce que l'entraînement (60, 80, 82) en forme de tube ou de bague est disposé entre ces brides (50, 54) et entoure les sections cylindriques creuses.

27. Microvanne selon l'une des revendications 14 à 26, caractérisée en ce que les deux éléments (10, 20) sont fabriqués en une matière non élastique.
